# EUROPEAN PATENT APPLICATION

(11) **EP 4 274 092 A1**
(43) Date of publication of application: **08.11.2023**
(21) Application number: 23170922.1
(22) Date of filing: 01.05.2023
(51) Int. Cl.: H02S 20/24, F24S 25/16, F24S 25/617, F24S 25/632, F24S 25/65, F24S 40/80

(54) **FIRE-RETARDANT FIXATION SYSTEM FOR SOLAR PANELS**

(30) Priority: 02.05.2022 NL 2031762
(71) Applicant: Van Der Valk Systemen B.V., 2681 LP Monster (NL)
(72) Inventor: Prins, Vincent, Roelofarendsveen (NL)
(74) Representative: Nederlandsch Octrooibureau

(57) **Abstract**

The invention relates to a fire-retardant plate (4) and a solar panel installation (8) or fixation system (1) having a fire-retardant plate. The solar panel installation (8) is arranged on an essentially flat surface such as a flat roof and the fire-retardant plates extend in at least a direction perpendicular to the essentially flat surface, wherein the fire-retardant plates divide a space under the solar panels and the essentially flat surface into a plurality of different compartments. These compartments have a fire-retardant effect in the event of fire. The invention also relates to methods for the installation of a solar panel installation and/or fixation system and rendering an existing solar panel installation fire-retardant by installing fire-retardant plates.

## Description

### Technical Specialization

The invention relates to a fire-retardant fixation system for solar panels on a flat roof or in a ground arrangement and two methods to install this type of this type of fire-retardant fixation system and to make an existing fixation system fire-retardant. The invention also relates to a loose fire-retardant plate that can be attached in an existing fixation system to make this fire-retardant.

### Prior art

Solar panels are used extensively on both flat and sloping surfaces and in particular on the roofs of buildings. Through the increasing demand for sustainability, on industrial sites and extensive fields or other surfaces, solar installations are installed with sometimes hundreds to tens of thousands of solar panels per installation. This type of installation generally consists of solar panels, a fixation system to install the panels on a roof, and the necessary electronics to transport the energy created by the solar panels to the electricity network. An example of this type of system is known from BE1019082A5.

The fire safety of the system is very important in the installation of solar energy systems. It is a goal of the invention to create a fixation system for solar panels that ensures improved fire safety of the solar energy installation. It is also a goal of the invention to create a method with which the fire safety of existing solar energy installations is improved.

### Summary of the invention

According to a first aspect of the invention there is provided a fixation system for supporting a plurality of solar panels on a essentially flat surface. The fixation system comprises a plurality of elongate profiles, wherein the elongate profiles are attached to the essentially flat surface and parallel to each other, a plurality of support elements with fixation elements for solar panels, wherein the support elements are attached to the elongate profiles and extend in one direction perpendicular to the essentially flat surface and are arranged to support the solar panels at a distance from the essentially flat surface, forming a space between the solar panels and the essentially flat surface, and the fixation system further comprising a plurality of fire-retardant plates that extend at least in one direction perpendicular to the essentially flat surface, wherein the fire-retardant plates divide the space under the solar panels into a plurality of different compartments.

In this context, the term "essentially flat" is used to indicate a slope of a maximum of 10 degrees, preferably a maximum of 5 degrees from the surface with reference to the horizon. The essentially flat surface may be located, for example, on a flat roof of a building or an open area, such as an industrial site or previously vacant property.

Within this context, the term "solar panel" is used as a collective name for solar panels, also called photo voltaic panels, solar accumulators and these types of flat objects that are arranged to collect solar energy from solar radiation and to transform it into another form of energy.

The support elements may be loose elements that are connected during the installation of the fixation system on the essentially flat surface to the elongate profiles, but can also be formed integrally and/or permanently connected to the elongate profiles. The support elements are preferably arranged to support the solar panels in a sloping position.

The fixation system has as an advantage that a plurality of compartments is formed under the solar panels in the solar panel installation. If a fire occurs in one part of the solar panel installation or a fire breaks through the roof of a building on which the solar panels are installed, the fire-retardant plates can ensure the delay of the spread of the fire. In so doing, the fire remains trapped longer in one or more of the compartments before it spreads to another compartment. This increases the safety of the installation. Specifically on roof building, this is very important because this is often included in an evacuation plan as an escape route. It is therefore desirable that parts of the roof stay fire-free for as long as possible.

The plurality of elongate profiles can be placed loose in the essentially flat surface or can be mechanically attached to it. A fixation system for solar panels placed on a flat roof with a small angle must be mechanically attached to the roof or must be weighted with ballast to ensure that the installation cannot move or tip over during a storm or wind gust. Preferably, only ballast is used, but in some embodiments the fixation system can also be attached mechanically to the roof surface. A disadvantage of a mechanical attachment is that the roof surface may be damaged by the installation of fixation elements. In addition, attaching mechanical fixation elements increases the required installation time and effort. In some embodiments, a combination of ballast and mechanical attachments can be used.

In one embodiment, one or more of the fire-retardant plates equipped with a ballast retainer. By using a ballast retainer on the fire-retardant plate, no loose ballast retainers such as gutters for inserting gravel are necessary any more. This can reduce material costs and speed up the required time for installation. In addition, ballast is added directly next to or above the elongate profiles, which provides for an effective remittance of the forces to the essentially flat surface. As an alternative, the ballast can be placed at the already accessible positions, such as on a truss that connects two parallel elongate profiles to each other.

In one embodiment, the elongate profiles are arranged at an equal distance from each other. In existing installations, there are often dilation distances to prevent instability of the fixation system after exposure to heat. Even though these dilation spaces are very suitable to also form a limitation of a compartment, the compartments according to the invention will typically have a smaller dimension. Within one section of the fixation system with a plurality of elongate profiles that are placed equidistant to each other, meaning without a dilation distance between them, there will be a plurality of compartments in such an embodiment. These compartments are attached to each other, which in this context means that adjacent compartments connect directly to each other without the interference of a dilation distance.

In one embodiment the support elements and/or fixation elements are arranged to attach the plurality of solar panels at a predefined angle from the essentially flat surface to the fixation system. This involves systems whereby the angle of the solar panels is chosen in advance and not changed with the angle of the sun during the year or during the day. By choosing a set angle the fire-retardant plates can be attached using a fixed connection and no adjustment mechanism must be installed to vary the shape, dimension and/or position of the fire-retardant plate depending on the angle. In alternative embodiments, the fire-retardant plates can be attached in installations wherein this type of variation of the angle is possible.

In one embodiment, the fire-retardant plates are attached in a direction parallel to the elongate profiles. In the most common set up in solar panel installations the solar panels are installed at an angle whereby they are rotated around an axis perpendicular to the elongate profiles. In such an installation, the fire-retardant plates will be attached parallel to the elongate profiles to prevent the spread of fire through the elongate open space under the solar panels.

Preferably, the fire-retardant plates are attached either to a top side of the elongate profiles or against one side of the elongate profiles. The fire-retardant plates then at least continue until the elongate profiles. In embodiments, the fire-retardant plates extend out from a bottom side of the elongate profiles. This reduces the opening between the fire-retardant plate and the essentially flat surface.

In one embodiment a maximum distance between the bottom of a solar panel and the essentially flat surface is at least 20 cm or at least 30 cm. In this context, the term "a maximum distance" is used to indicate the distance between the essentially flat surface and the bottom of a solar panel at the highest point when a solar panel is installed at an angle. Typically, the solar panels are installed at an angle of at least 10 degrees to improve the yield of the installation.

In one embodiment, the fixation system includes a plurality of back plates, wherein each back plate extends between two elongate profiles. Usually, a natural barrier is already created through the angled position of the solar panels through which the fire can spread less quickly along this direction. The addition of a back plate at the position where a solar panel has a maximum distance to the essentially flat surface provides for better fire retardation in this direction.

In one embodiment, the fixation system has at least eight parallel and equidistant elongate profiles or at least twelve parallel and equidistant elongate profiles. The fire-resistant function offers many advantages in large systems where a large number of solar panels are arranged in contiguous rows. By adding the fire-retardant plates, one prevents fire from spreading uninhibited under the solar panels in the event of a fire.

In one embodiment the total width of the parallel and equidistant elongate profiles is a maximum of 30 meters. Considering thermal expansion, an installation broader than 30 meters should preferably be divided up into multiple groups with solar panels, wherein each group extends over a width of a maximum of 30 meters.

In one embodiment the compartments are arranged so that they extend in every direction over at the most 20 meters or at the most 10 meters, or at the most 5 meters. Depending on the size and orientation of the solar panels, this means that the compartments are arranged for example to extend over at most 10 solar panels, or at the most 5 solar panels. In some embodiments, smaller compartments can be formed such as per 5 solar panels, or even per individual panel. The skilled person will understand that the choice of the size of the compartments must be made based on a consideration of the higher material costs through the extra fire-retardant plates with an eye to the increased fire safety of the installation.

In one embodiment, the fixation system is arranged to attach to any of the plurality of solar panels to the fixation system at the same angle α from the essentially flat surface. The pre-determined angle α is a generally at most 25 degrees, for example 10 or 15 degrees. The fixation system can thus both be arranged to place the panels in a so-called landscape or a portrait configuration. In some embodiments, the solar panels can be attached at various heights with regard to the elongate profiles, but each at the same angle. In such embodiments, the fire-retardant plates can extend along a plurality of solar panels. Optional back plates are favourable in this set-up because in addition to the fire-retardant function they also limit the airflow and associated upwards forces under the solar panels. In a further embodiment the fixation system is arranged for realizing a so-called "south" set-up, whereby the sloping surface of the solar panels faces the south. The skilled person will understand that the panels must be installed approximately in the south wind direction for the maximum yield, but that depending on the positioning of the essentially flat surface, the precise position of the panels may deviate.

In one embodiment, the fixation system is arranged to attach a first number of a plurality of solar panels to the fixation system at an angle α with regard to the essentially flat surface and a second number of the plurality of solar panels at an angle -α with regard to the essentially flat surface. The pre-determined angle α is a generally a maximum of 25 degrees, for example 10 or 15 degrees. The fixation system can thus both be arranged to place the panels in a so-called landscape or a portrait configuration. The fire-retardant plates can extend over the length or width of a single solar panel, or may extend over a number of solar panels. In an a further embodiment the fixation system is arranged for realizing a so-called "east-west" set-up, whereby in alternation, the sloping surface of a first solar panel faces the east and a second solar panel with a sloping surface faces west. The skilled person will understand that the panels must be installed approximately in the east and west wind direction, but that depending on the positioning of the essentially flat surface, the precise position of the panels may deviate. A possible back plate can be attached as an intermediate plate between a solar panel facing east and one facing west. A fire-retardant plate can extend over the length or width of a single solar panel or over the length and breadth of a pair of east-west oriented solar panels.

In one embodiment the essentially flat surface is a flat roof of a building and the fire-retardant plates are attached above or near the fire-retardant structural elements of the underlying building. Fire may occur on the roof by the ignition of a part of the solar panel installation, but can also arise in the building below if the solar panels are installed on the flat roof of a building. In the latter case, an optimal inhibition of the spread of fire is achieved by aligning the fire-retardant plates in the direction of attachment with a fire-resistant structure of the underlying building.

In one embodiment the fixation system also comprises a plurality of side plates attached along at least one part of the outer perimeter of the fixation system. Preferably, the side plates extend mainly perpendicular to the essentially flat surface. The side plates can assume a fire-retardant function in the event of fire. In addition, the side plates may form a barrier against the wind to limit airflow under the solar panels.

According to a second aspect, and in accordance with the advantages and effects described above, the invention provides a solar panel installation arranged on a essentially flat surface, the solar panel installation comprising a fixation system with a plurality of fire-retardant plates, wherein the fire-retardant plates extend in at least one direction perpendicular to the essentially flat surface, wherein the fire-retardant plates divide a space between the solar panels and the essentially flat surface into a plurality of different compartments.

In one embodiment, the solar panel installation has a fixation system according to the first aspect of the invention and a plurality of solar panels supported by the fixation system.

According to a third aspect, and in accordance with the advantages and effects described above, the invention provides a method for arranging a fire-retardant fixation system for solar panels on an essentially flat surface, wherein the method comprises: arranging a plurality of elongate profiles with support elements and fixation elements for solar panels on an essentially flat surface, wherein the elongate profiles are arranged parallel to each other and wherein the support elements are configured to support the solar panels at a distance from the essentially flat surface; arranging a plurality of fire-retardant plates on a section of the elongate profiles, the plates extending essentially perpendicular to the essentially flat surface, wherein the plates are arranged in a manner such that the compartments are formed within the fixation system after attachment of the solar panels, wherein the compartments are at least limited between a bottom side of the solar panels, a fire-retardant plate of the plurality of fire-retardant plates and the essentially flat surface.

In one embodiment, the method further comprises arranging a plurality of side plates along the outer perimeter of the fixation system. These side plates prevent airflow under the solar panels and form an extra barrier against a possible fire.

According to a further aspect, and in accordance with the advantages and effects described above, the invention provides a method for arranging a fire-retardant solar panel installation on an essentially flat surface, wherein the method comprises: arranging a fire-retardant fixation system according to the invention and attaching a plurality of solar panels on the fixation system using the fixation elements.

According to another aspect, and in accordance with the advantages and effects described above, there is provided a method for making an existing solar panel installation on an essentially flat surface fire-retardant, the solar panel installation comprising: a fixation system comprises a plurality of elongate profiles, wherein the elongate profiles are attached to the essentially flat surface and parallel to each other, and a plurality of support elements with fixation elements for solar panels, wherein the support elements are attached to the elongate profiles and extend in one direction perpendicular to the essentially flat surface and are arranged to support the solar panels at a distance from the essentially flat surface; the solar panel installation further comprising a plurality of solar panels supported by the fixation system, wherein a space is formed between the solar panels and the essentially flat surface. In this, the method includes the removal of a solar panel from the plurality of solar panels; and the installation of a fire-retardant plate in the longitudinal direction of an elongate profile and extending in an area perpendicular to the essentially flat surface to create a plurality of compartments in the solar panel installation; and the replacement of the solar panel that was removed.

An advantage of the fire-retardant fixation system is that the fire-retardant plates and/or side plates can be easily installed on an existing fixation system. Through this, it is possible to improve the safety of the system in a relatively simple manner. The method also allows for the improvement of existing installations when this appears to be necessary according to the local laws and regulations. In the embodiments, generally a larger number of solar panels are removed simultaneously, after which a plurality of fire-retardant plates are installed. Finally, all of the larger number of solar panels will be placed back.

In one embodiment the method further comprises removing ballast from the existing solar panel installation; and the addition or replacement of ballast in another form and/or in another location in the fixation system. In existing installations, it is possible to place ballast in the position where a fire-retardant plate will be installed. When this is the case, the ballast must be removed and replaced in another position or replaced in another form to guarantee the stability of the solar panel installation. These steps usually take place after the removal of the solar panels.

In one embodiment, the fire-retardant plate preferably has a ballast retainer and the ballast placed in the ballast retainer. The ballast retainer may be a gutter, for example, where gravel, tiles or stones can be placed.

According to a further aspect, and in accordance with the advantages and effects described above, the invention comprises a fire-retardant plate for use in a fixation system according to the first aspect of the invention. As already described above, the loose fire-retardant plates can be used to create compartments in existing solar panel installations.

In one embodiment, the fire-retardant plates are substantially triangular in shape. Solar panels are usually mounted at an angle to the essentially flat surface to increase the yield of the panels. Therefore the distance between a first side of the panel and the essentially flat surface is not the same as the distance between a second side of the panel and the essentially flat surface. An essentially triangular shape of the fire-retardant plate can thus cover the open side that is formed. The skilled person will understand that in this context "essentially triangular" refers to the gross exterior circumference of the fire-retardant plate. Within this context, a circumference of a triangle with small indentations or protrusions along the circumference, rounded or truncated angles and similar variations on the profile also fall under the term "essentially triangular". The fire-retardant plates can extend over the length or width of a single solar panel, or may extend over the length or width of a number of solar panels. This is dependent on the configuration of the solar panel installation.

In one embodiment, the fire-retardant plate is made of a metal or metal alloy, preferably galvanized steel. This material is lightweight and easy for an installer to use. This makes installation faster. In addition, galvanized steel is highly resistant to high temperatures.

In one embodiment, the fire-retardant plate is equipped with a ballast retainer. The ballast retainer can be used to fill with ballast. In the case of making an existing installation fire-retardant, this creates the option of placing any ballast removed into the ballast retainer. For a completely new installation, the fire-retardant plate with ballast retainer replaces the presence of a loose ballast retainer.

### Brief description of the figures

Next, embodiment examples of the invention will be described exclusively as examples using the accompanying schematic diagrams. Corresponding parts are indicated in the figures by corresponding reference symbols. Multiple examples of one part may be indicated with an additional letter in their reference symbol. So two examples of a respective part "40" can be indicated by "40a" and "40b". The reference symbol can be used without the additional letter (ex. "40") to make a general reference to an unspecified example or to all examples of that part, while the reference symbol will have an additional letter (e.g. "40a") to refer to a specific example of the part.
Figure 1A shows a perspective view of a solar panel installation installed using a fixation system according to a first embodiment.
Figure 1B shows a detailed view drawing of the solar panel installation in Fig. 1A. For illustrative purposes, two solar panels have been removed to show the fixation system.
Figure 2A shows a perspective view of a fire-retardant plate from the solar panel installation in Fig. 1A-1B.
Figures 2B and 2C respectively show a front view and side view of the fire-retardant plate in Fig. 2A.
Figures 3A-3F show a method for improving the fire safety of an existing solar panel installation.
Figure 4 shows a schematic top view of a fire-retardant solar panel installation according to a second embodiment.

The figures are only intended for illustrative purposes, and do not limit the scope of protection defined by the claims.

### Description of the embodiments

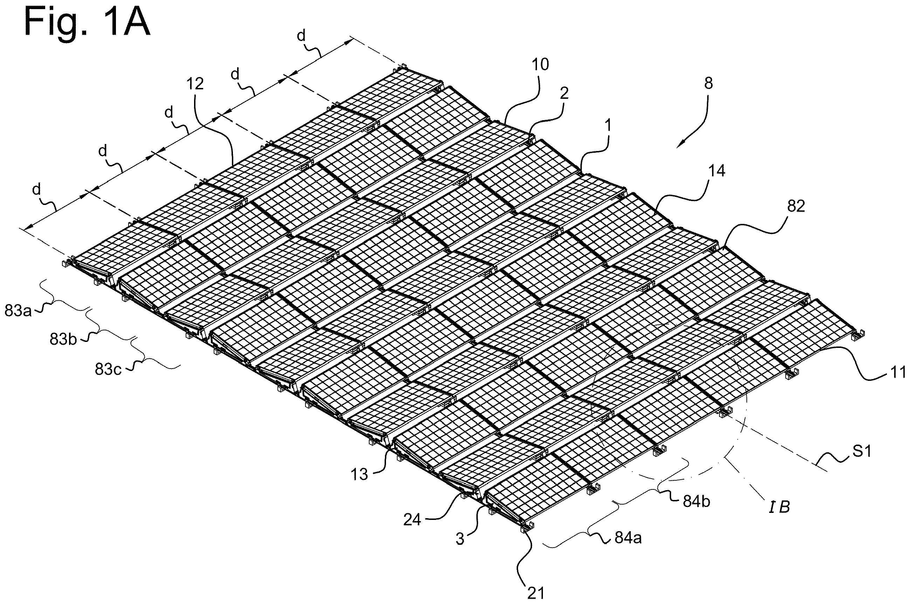

Figure 1A shows a schematic perspective view of a solar panel installation 8 with a plurality of solar panels 82 installed using a fixation system 1 according to a first embodiment. The solar panel installation 8 is installed on an essentially flat surface.

The solar panels 82 are installed in a grid with ten rows 83 and five columns 84. An exterior perimeter 10 of the installation 8 is formed by a front side 11, a back side 12, a first side 13 and a second side 14.

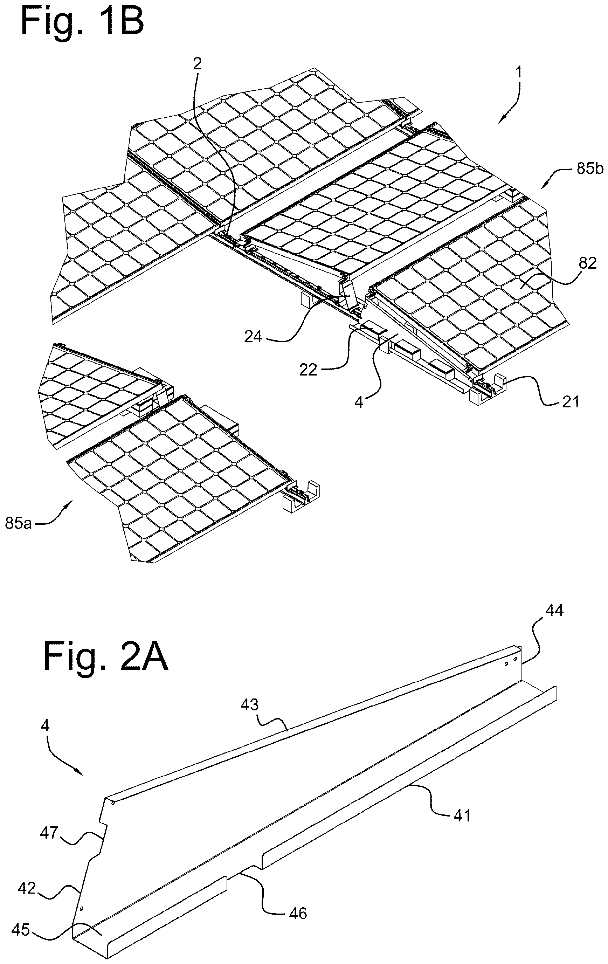

The fixation system 1 comprises a plurality of elongate profiles 2 placed parallel to each other at a distance *d*, and supported on the essentially flat surface by a plurality of feet 21. The fixation system 1 further comprises a plurality of support elements 4 with fixation elements, side plates 3 and fire-retardant plates 4 (not visible in Fig. 1A). The fire-retardant plates 4 are installed along a line S1. Figure 1B shows a detailed view of the solar panel installation 8 in Fig. 1A after removing two solar panels 82, so that the fire-retardant plates 4 are visible.

The fixation system 1 has a first number of solar panels 82 in uneven rows 83a, 83c at an angle α (not indicated) to the essentially flat surface, while a second number of solar panels are held in even rows 83b at an angle - α (not indicated) to the essentially flat surface. The angle α is about 10 degrees here, but can if desired be adjusted depending on the most favourable position for the solar panels 82 to achieve the highest possible yield of solar energy. The type of solar panel installation 8 shown is also known by the professional as the "east-west" configuration. The solar panels 82 each have dimensions of about 2 m by about 1 m. The total installation is thus about 10m wide and 10 m long.

The plurality of elongate profiles 2 are placed parallel to each other and always at an even distance d. The heart-to-heart distance d between the elongate profiles 2 is chosen as the width of the solar panel 82 and an additional 10 mm to create space for the fixation elements between the solar panels 82. The solar panels 82 in a single row 83 are thus closely connected to each other and therefore, it is only possible to a very limited degree that an airflow occurs between the opening of the two sequential solar panels 82 in a row 83. The top side of the solar panel installation 8 is thus nearly sealed per row 83.

On both sides 13, 14 of the fixation system 1, there are side plates 3 attached to prevent wind blowing from one side 13, 14 under the solar panels 82. Wind that finds its way under the panels 82 can exert force with an upward component on the solar panels 82. By closing the open sides 13, 14 using side plates 3, one prevents the occurrence of this type of upward force. It will be understood by the skilled person that the closure does not need to be completely airtight and is meant to deflect the airflow. By the absence of an upward force under the solar panels 82, the fixation system 1 can be designed to be lighter than if no side plates 3 are attached. This means that lighter materials can be used and that the amount of ballast or the strength of a mechanical attachment to the roof 81 can be smaller. This provides for lower material costs and generally also a more rapid installation procedure because lighter materials are easier to manoeuvre.

The side plates 3 are attached against the elongate profile 2 and extend substantially perpendicular to the flat surface 81. The side plates 3 are attached on both sides 13, 14 of the fixation system 1 and the space under a single row of solar panels 83 is thus limited to the sides 13, 14.

In the event of fire, the flames can spread quickly in the open space under each row 83a, 83b, 83c under the solar panels 82. To prevent this, every row 83a, 83b, 83c of normally five connected solar panels 82 is divided into at least two compartments 85a, 85b along the line S1 as shown in Fig.. 1B. The fire-retardant plates 4 are not visible from the outside and therefore have no disadvantageous effects on the yield of the solar panels 82 through possible formation of shadows and have no disadvantageous effects on the stability of the system through any changes regarding airflow around the solar panel installation. The fire-retardant plates 4 are also designed to be able to receive ballast 22. The ballast 22 is added in the form of bricks, but can also be replaced by gravel and/or other heavy objects.

The skilled person will understand that the positioning of fire-retardant plates 4 in the embodiment shown is only indicative and that the fire-retardant plates 4 can be installed at any desired position to optimize the fire-resistance of an existing or new solar panel installation. If possible, the fire-retardant plates are attached above a possible fire-resistant structure of a building. The essentially flat surface is typically formed in this type of application by the flat roof of a building.

Figure 2A shows a perspective view of a fire-retardant plate from the solar panel installation in Fig. 1A-1B. The fire-retardant plate 4 has a bottom side 41, a sloping side 42 and a bottom side 43 that together define an essentially triangular shape. The angle between the bottom side 41 and the top side 43 is truncated, resulting in a fourth obtuse side 44. The shape of the fire-retardant plate 4 is still always essentially triangular despite the truncated angle. A functional property of an essentially triangular plate is that it is suitable for closing off a triangular opening formed between the elongate profiles 2 and one side of a solar panel 82 without substantially protruding on the top side of the solar panel 2 or on the bottom side of the elongate profile 2.

The bottom side 41 of the fire-retardant plate 4 is equipped with a ballast retainer 45 for receiving ballast. The ballast retainer 45 is formed as a gutter and is about 12 cm wide and 4 cm high and can be filled with gravel, stones or tiles to weight the structure. A gutter of about 12 cm is, for example, suitable for accommodating classic street bricks. Street bricks generally have dimensions of about 11 cm wide and 22 cm long. The bottom side 41 and oblique side 42 also have recesses 46, 47. The recess 46 in the bottom side offers space for the placement of the fire-retardant plate on a foot 21 of the plurality of feet. The recess 47 in the oblique side 42 can be used to affix a back plate in a direction perpendicular to the essentially triangular surface of the fire-retardant plate 4.

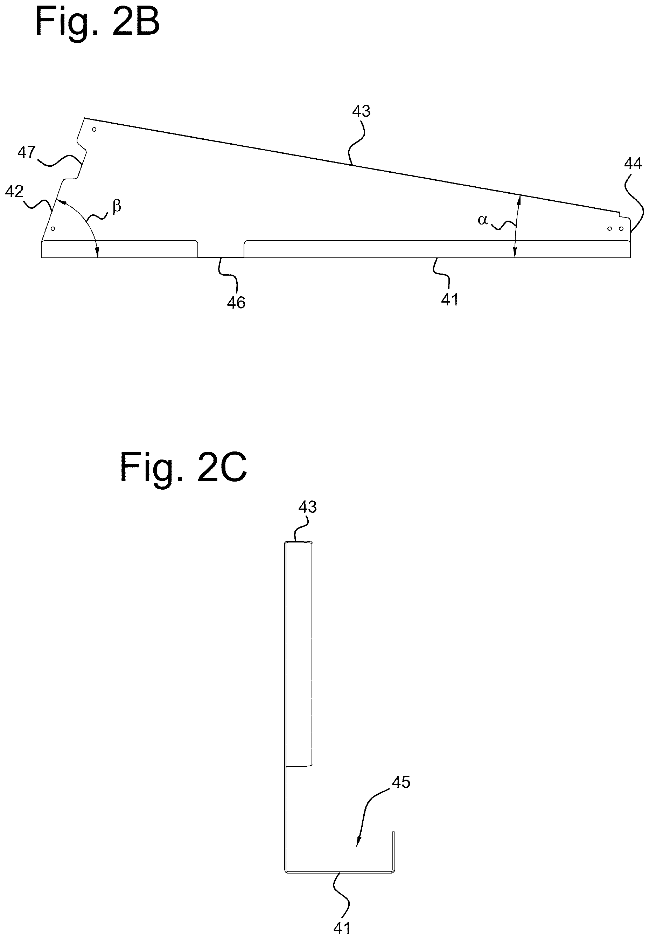

Fig. 2B and 2C respectively show a front view and side view of the fire-retardant plate 4. The angle α between the bottom side 41 and tip side 43 is equal to the angle of the solar panels 82 to the flat roof 81. The bottom side 41 and oblique side 42 create an angle β. This angle is approximately 70 degrees. A possible back plate is attached at the same angle β so that it fits well. In the system shown in Fig. 1A, there are no back plates present. The skilled person will understand that primarily in a so-called "south" configuration, whereby all solar panels are installed at the same angle to the essentially flat surface, back plates are important to combat the wind flow.

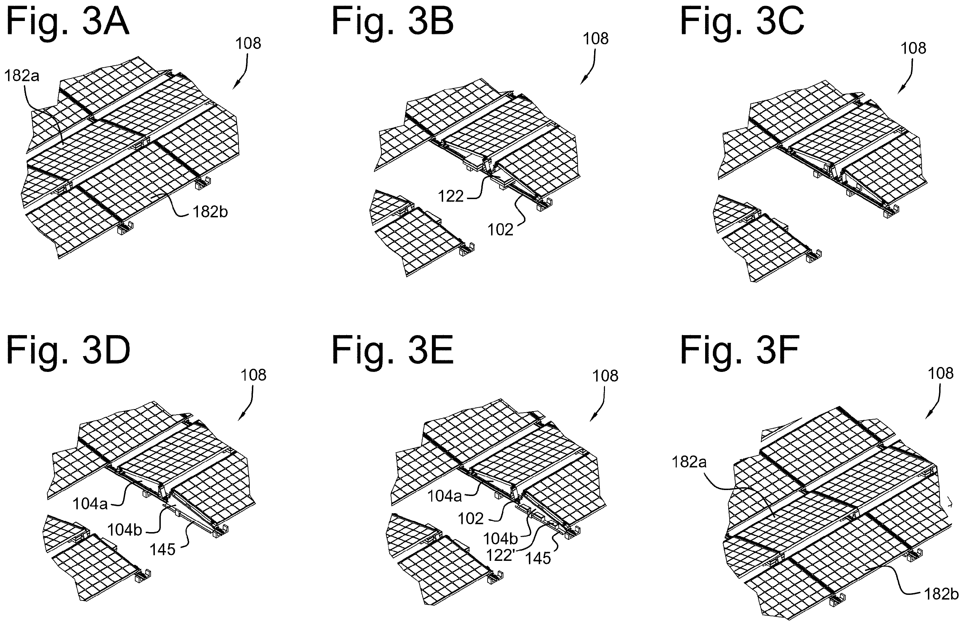

The fire-retardant plates 4 are preferably already mounted during the installation of a solar panel installation 8, but can be later added to existing systems. Figures 3A-3F show a method for improving the fire safety of an existing solar panel installation 108.

Fig. 3A shows an existing solar panel installation 108 without a fire-retardant structure. In order to make the installation fire-retardant, two solar panels 182a, 182b are removed by a professional.

Fig. 3B shows the solar panel installation 108 after removal of the solar panels 182a, 182b. By removing the solar panels 182a, 182b, the skilled person provides himself with access to one part of the elongate profile 102 that would normally be hidden under the solar panels 182. As illustrated, the elongate profiles 102 are kept in place with ballast 122 in the form of paving stones. This ballast 122 is removed (see Fig. 3C) to make space for a fire-retardant plate 104.

Fig. 3D shows the solar panel installation 108 after the installation of two fire-retardant plates 104a, 104b. The fire-retardant plates 104a, 104b are plates as illustrated in Fig. 2A-2C. The two plates 104a, 104b are installed opposite each other so that for the first fire-retardant plate 104a, the ballast retainer 145 is located on a first side of the elongate profile 102, while for the second fire-retardant plate 104b, the ballast retainer 145 is located on a second side of the elongate profile 102.

After installation of the fire-retardant plates 104a, 104b, new ballast 122' can be inserted into the ballast retainer 145. Fig. 3E shows ballast 122' in the form of bricks. However, other types of ballast can be used, such as paving stones or gravel. Here the shape and dimensions of the ballast retainer 145 can be adapted to the type of ballast.

After that, the solar panels 182a, 182b can be replaced. Fig. 3F shows the solar panel installation 108 after replacement of the solar panels 182a, 182b. A difference is hardly visible from the top side. The aerodynamics of the solar panel 108 installation as a whole is thus not notably affected.

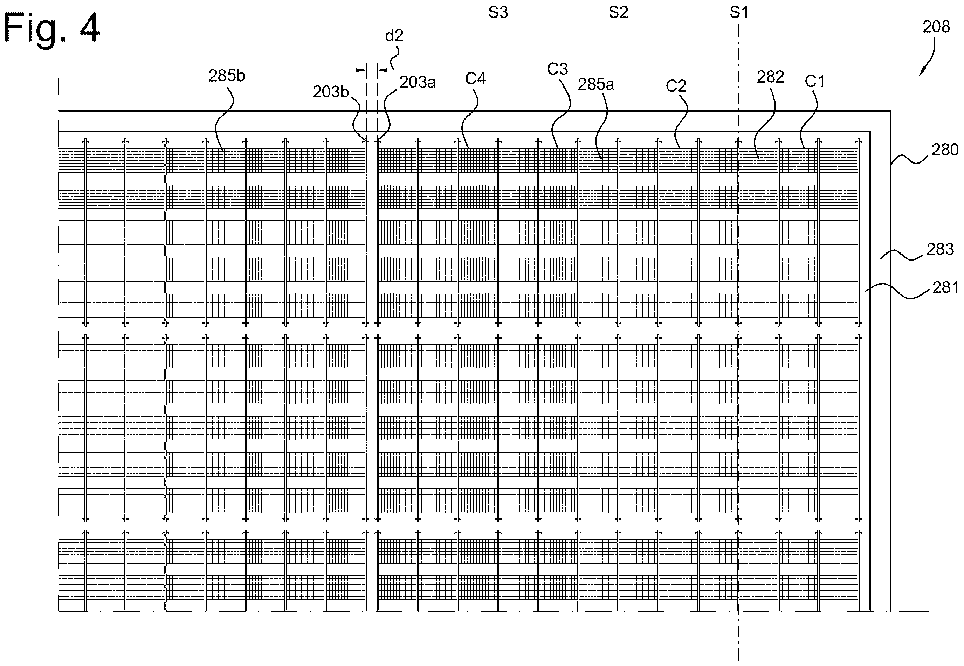

Figure 4 shows a very schematic top view of a solar panel installation 208 according to a second embodiment on a flat roof 281 of a building 280. The flat roof 281 is equipped with an eave 283 that extends about a meter above the flat roof 281. Thus the solar panel installation 208 lies in the lee and it is not necessary to install side plates along an outer perimeter of the installation 208 to protect from the wind

The solar panel installation 208 is installed in a so-called "south" configuration and comprises hundreds of solar panels 282 that are divided into various groups 285 with solar panels 282 to be able to collect the thermal output of the entire installation 208. Each group 285a, 285b contains 60 solar panels 282. The outermost elongate profiles 203a, 203b of two adjacent groups 285a, 285b are placed at a distance d2 from each other. The distance d2 is on the one hand large enough to catch the thermal output and on the other hand, small enough to prevent an air stream having the space to fit under the solar panels 282 from the side. In the embodiment illustrated, the distance d2 is approximately 400 mm. With this type of small distance, it is not necessary for the stability against the wind to install side plates on the profiles 203a, 203b. However, these side plates do have advantageous effects in the management of the flames in the event of fire. Fire-retardant side plates are attached for this reason next to the dilation opening d2 of adjacent groups 285a, 285b. In addition, there is a plurality of fire-retardant plates attached along the lines S1, S2, S3 within the group 285a. Within each groups 285, in this way a plurality of compartments C1, C2, C3, C4 are formed. Also, there is a back plate installed between every two elongate profile 203 within a group 285 per solar panel 282..

It will be clear that in the embodiments described above are only described by means of an example and not in any limiting meaning, and that various changes and adaptations are possible without falling outside of the scope of the invention and that the scope is only determined by the claims below.

## Claims

1. A fixation system for supporting a plurality of solar panels on an essentially flat surface, wherein the fixation system comprises:
a plurality of elongate profiles, wherein the elongate profiles are placed on an essentially flat surface parallel to each other,
a plurality of support elements with fixation elements for solar panels, wherein the support elements are connected to the elongate profiles and extend in one direction perpendicular to the essentially flat surface, wherein the support elements are configured to support the solar panels at a distance from the essentially flat surface, thereby forming a space between the solar panels and the essentially flat surface; and the fixation system further comprises:
a plurality of fire-retardant plates that extend at least in a direction perpendicular to the essentially flat surface, wherein the fire-retardant plates divide the space under the solar panels into a plurality of different compartments.

2. The fixation system according to claim 1, wherein one or more of the fire-retardant plates is equipped with a ballast retainer.

3. The fixation system according to claims 1 or 2, wherein the elongate profiles are arranged at an equal distance from each other.

4. The fixation system according to one of the preceding claims, wherein the support elements and/or fixation elements are configured to attach the plurality of solar panels at a predefined angle from the essentially flat surface to the fixation system, preferably,
wherein the fixation system is configured to attach all of the plurality of solar panels to the fixation system at the same angle α with respect to the essentially flat surface,
or wherein the fixation system is configured to attach a first number of the plurality of solar panels to the fixation system at an angle α with respect to the essentially flat surface and a second number of the plurality of solar panels at an angle -α with regard to the essentially flat surface.

5. The fixation system according to any of the preceding claims, wherein the fire-retardant plates are attached in a direction parallel to the elongate profiles, preferably further comprising a plurality of back plates, wherein each back plate extends between two elongate profiles.

6. The fixation system according to one of the preceding claims, wherein the fixation system comprises at least eight parallel and equidistantly spaced elongate profiles, or at least twelve parallel and equidistantly spaced elongate profiles, and/or wherein the compartments are configured such that these extend in every direction over at the most 20 meters or at the most 10 meters, or at the most 5 meters.

7. A solar panel installation arranged on an essentially flat surface, the solar panel installation comprising a fixation system with a plurality of fire-retardant plates, wherein the fire-retardant plates extend in at least one direction parallel to the essentially flat surface, wherein the fire-retardant plates divide a space between the solar panels and the essentially flat surface into a plurality of different compartments, preferably wherein the plurality of solar panels is supported by a fixation system according to one of the claims 1-6.

8. A method for arranging a fire-retardant fixation system for solar panels on an essentially flat surface, wherein the method comprises:
arranging a plurality of elongate profiles with support elements and fixation elements for solar panels on an essentially flat surface, wherein the elongate profiles are attached parallel to each other and wherein the support elements are configured to support the solar panels at a distance from the essentially flat surface;
arranging a plurality of fire-retardant plates on a section of the elongate profile, the plates extending essentially perpendicular to the essentially flat surface,
wherein the plates are arranged in a manner such that compartments are formed within the fixation system after fixation of the solar panels, wherein the compartments are at least limited between a bottom side of the solar panels, a fire-retardant plate of the plurality of fire-retardant plates and the essentially flat surface.

9. A method for arranging a fire-retardant solar panel installation on an essentially flat surface, wherein the method comprises:
arranging a fire-retardant fixation system according to claim 8,
attaching a plurality of solar panels to the fixation system using the fixation elements.

10. A method for making an existing solar panel installation on an essentially flat surface fire-retardant, wherein the solar panel installation comprises:
a fixation system comprising a plurality of elongate profiles, wherein the elongate profiles are arranged on the essentially flat surface and parallel to each other, and
a plurality of support elements with fixation elements for solar panels, wherein the support elements are attached to the elongate profiles and extend in a direction perpendicular to the essentially flat surface and are arranged to support the solar panels at a distance from the essentially flat surface; the solar panel installation further comprising
a plurality of solar panels supported by the fixation system, wherein a space is formed between the solar panels and the essentially flat surface; and
wherein the method further comprises:
removing a solar panel from the plurality of solar panels; and
placing a fire-retardant plate in the longitudinal direction of an elongate profile and
extending in a plane perpendicular to the essentially flat surface to create a plurality of compartments in the solar panel installation;
placing back the solar panel that was removed.

11. The method according to claim 10, further comprising, after removing the solar panel:
removing ballast from the existing solar panel installation; and
placing or placing back ballast in another form and/or at another position in the fixation system,
preferably wherein the fire-retardant plate has a ballast retainer and wherein the ballast is placed in the ballast retainer.

12. A fire-retardant plate for use in a fixation system according to one of the claims 1-6.

13. The fixation system according to any of the preceding claims, wherein the fire-retardant plates have a substantially triangular shape.

14. The fire-retardant plate according to claim 12 or 13, wherein the plate is made of a metal or metal alloy, preferably wherein the fire-retardant plate is made of galvanized steel.

15. The fire-retardant plate according to one of claims 12-14, wherein the fire-retardant plate is equipped with a ballast retainer.
